# EUROPEAN PATENT SPECIFICATION

(11) **EP 3 123 064 B1**
(45) Date of publication and mention of the grant of the patent: **03.01.2018**
(21) Application number: 15718605.7
(22) Date of filing: 17.03.2015
(51) Int. Cl.: F16K 11/07, B23P 15/00, F16K 27/04

(54) **VALVE BODY OF A PNEUMATIC VALVE WITH SEALING RING SEATS**
VENTILKÖRPER EINES PNEUMATIKVENTILS MIT DICHTUNGSRINGSITZEN
CORPS DE SOUPAPE D'UNE SOUPAPE PNEUMATIQUE À SIÈGES DE BAGUE D'ÉTANCHÉITÉ

(30) Priority: 26.03.2014 IT BS20140073
(43) Date of publication of application: 01.02.2017
(73) Proprietor: Aignep S.p.A. Societa' Unipersonale, 25070 Bione, Brescia (IT)
(72) Inventor: BUGATTI, Graziano, I-25070 Bione (BRESCIA) (IT)
(74) Representative: Pulieri, Gianluca Antonio
(86) International application number: PCT/IB2015/051955
(87) International publication number: WO 2015/145305

(56) References cited:
- EP-A1- 0 152 620
- EP-A1- 2 674 649
- WO-A1-2005/031199
- WO-A1-2013/130316
- WO-A1-2013/183616
- DE-A1-102004 049 314
- DE-A1-102010 023 667
- FR-A- 1 388 659
- US-E- R E25 251

## Description

The present invention relates to a pneumatic valve controlling the flow of pressurised air to a utility.

Such valves generally consist of a valve body in which a shaft or spool sliding in a compartment where the valves come out is housed. The shaft, upon command, performs a translation in the compartment, placing in communication or fluidically separating the ways, depending on the different operating modes of the valve. To such purpose, various gaskets are also arranged in the compartment, to engage the shaft adequately. The correct positioning and integrity of said gaskets is essential for the proper operation of the valve, especially to avoid air leakage.

However, during valve assembly in the factory, the insertion of the gaskets inside the compartment often causes damage thereto, since, coming into contact with the walls of the compartment, they may be cut or damaged.

To ensure a high quality assembled valve, preventing said drawback, the insert operation of the gaskets is conducted with considerable caution and by an operator, resulting in a slowdown in production. Figure 1 of US R E 25251 E is considered to represent the closest prior art to the subject-matter of claim 1. It discloses a pneumatic valve comprising: - a valve body; - a shaft or spool; - at least a downward gasket and an upward gasket, each gasket consisting of an annular gasket; - at least one spacer; and wherein - the valve body comprises: i) a transversal compartment translatably accommodating the shaft or spool and suitable for the insertion of annular gaskets for sealing with the shaft according to an insertion direction along said transversal axis; ii) at least one inlet duct leading to the transversal compartment by means of an inlet opening and at least one outlet duct leading to the transversal compartment by means of an outlet opening, said inlet duct and outlet duct being side-by-side and parallel with each other; iii) wherein, according to said insertion direction, downwardly of the outlet opening, the transversal compartment is annularly delimited by a downward support surface suitable for the radial containment of a downward gasket, and upwardly of the outlet opening, the transversal compartment is annularly delimited by an upward support surface suitable for the radial containment of an upward gasket, iv) and wherein the diameter of the upward support surface is greater than the diameter of the downward support surface for a convenient insertion of the downward gasket; - the downward gasket placed on the downward support surface and the upward gasket placed on the upward support surface, wherein the upward gasket and the downward gasket have the same seal internal diameter and different external diameter, according to the diameter of the corresponding support surface; - at least one spacer placed in abutment with the downward gasket and the upward gasket, comprising a centre annular portion permeable to the air flow.

The purpose of the present invention is to make a pneumatic valve which meets the quality standards required by the sector and overcomes the drawbacks mentioned with reference to the prior art.

Such purpose is achieved by a valve body made according to claim 1, a pneumatic valve according to claim 4 and by manufacturing methods according to claims 7 and 8.

The characteristics and advantages of the valve and the method according to the present invention will be evident from the description given below, by way of a non-limiting example, according to the appended drawings, wherein:

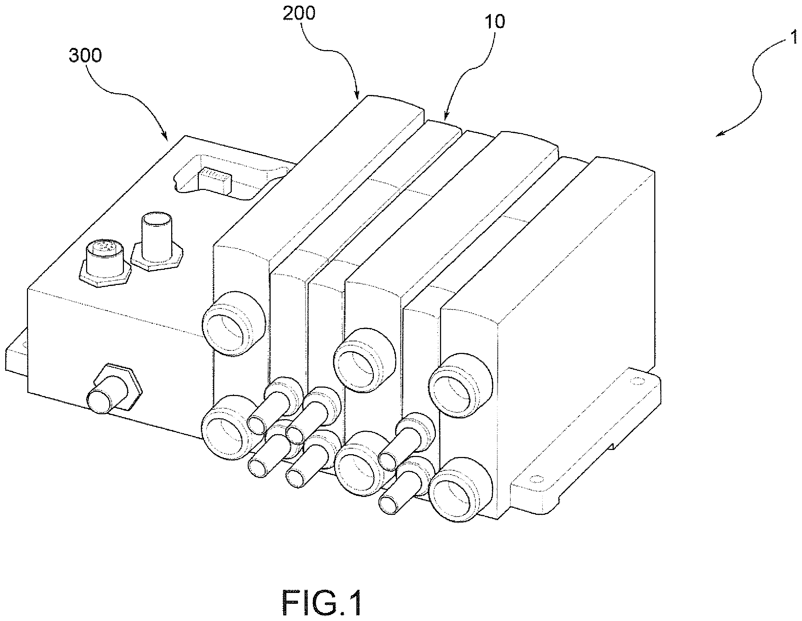

- figure 1 shows a functional group comprising a pneumatic valve according to one embodiment of the present invention;
- figure 2 shows a cross-section of the pneumatic valve in figure 1;
- figure 3 is an enlargement of the detail III in figure 2;

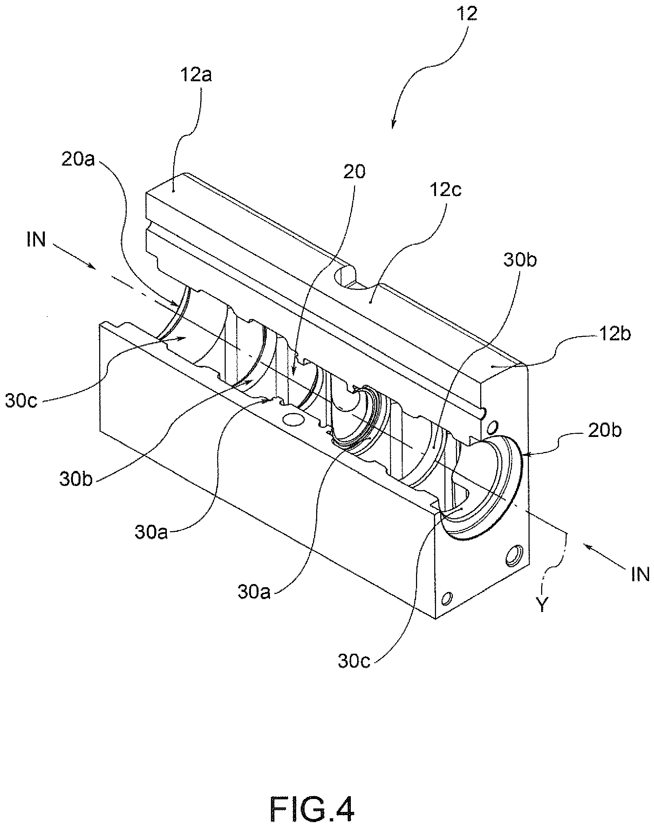

- figure 4 shows a valve body of the valve according to one embodiment of the present invention;
- figure 5 shows a spacer of the valve according to one embodiment of the present invention;
- figure 6 shows a shaft or spool of the valve according to one embodiment of the present invention;
- figures 7a and 7b show two steps of a manufacturing method of a valve according to one embodiment of the present invention.

With reference to the appended drawings, reference numeral 1 globally denotes a functional group comprising at least one pneumatic valve 10, at least one distributor 200 operatively connected to the valve 10 for the supply of pressurised air to the utility, and a box 300 for containing circuit boards for connection to a PLC for the control of the valve or for the electrical connection.

The pneumatic valve 10 comprises a valve body 12 inside which a transversal compartment 20 is made which extends along a transversal axis Y, between a distal portion 12a in which a distal end aperture 20a of the compartment 20 is made, and a proximal end portion 12b, in which a proximal end aperture 20b of the compartment 20 is made, passing through an inner portion 12c placed between these.

The valve 10 further comprises a distal head 13a coupling in a removable manner to the distal portion 12a of the valve body 12 and a proximal head 13b coupling in a removable manner to the proximal portion 12b of the valve body 12; the heads 13a, 13b closing the transversal compartment 20 at the transversal ends.

Furthermore, the valve 10 comprises a shaft 50 or spool, housed mainly in the compartment 20 and translatable upon command in said compartment 20.

The valve 10 is equipped with a predetermined number of ways.

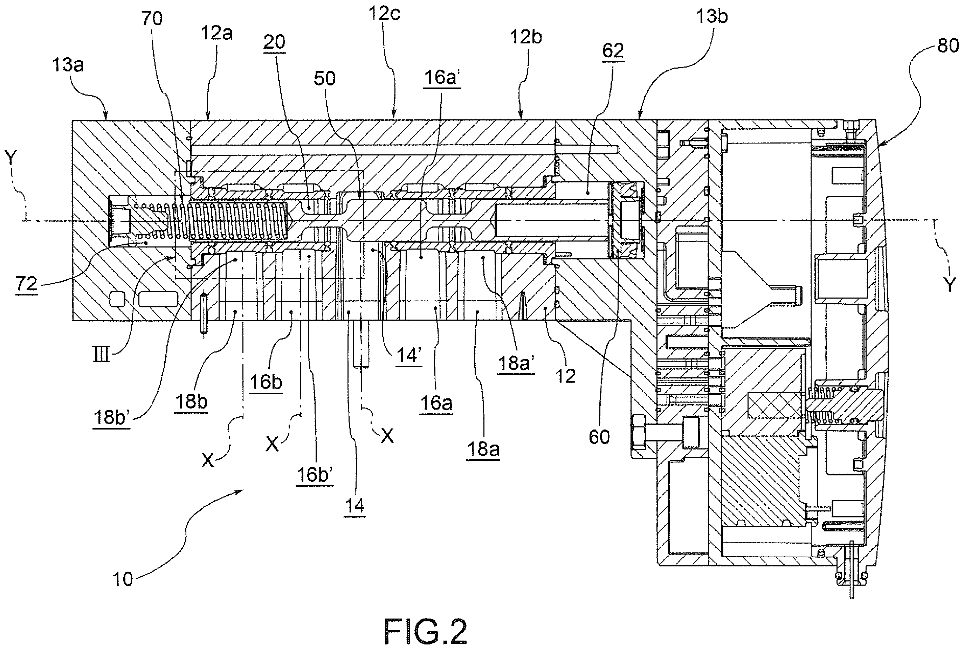

For example, according to the embodiment variant shown in figure 2, the valve body 12 has an inlet duct 14, a first outlet duct 16a, a second outlet duct 16b, immediately next to the inlet duct 14, a first exhaust duct 18a and a second exhaust duct 18b, immediately next to the first outlet duct 16a and to the second outlet duct 16b, on the opposite side to the inlet duct 14.

The inlet duct 14, the outlet ducts 16a, 16b and the exhaust ducts 18a, 18b are the ways of the valve 10. In the case in the example, it is therefore a 5-way valve.

Preferably, the inlet duct 14, the outlet ducts 16a, 16b and exhaust ducts 18a, of a cylindrical, circular shape, extend along respective main axes X, parallel to each other and perpendicular to the transversal axis Y.

The transversal compartment 20 intercepts the inlet duct 14, at least one outlet duct 16a, 16b and preferably at least one exhaust duct 18a, 18b, placing them in communication with each other.

In a transit area between the inlet duct and the outlet duct or in a transit area between the outlet duct and the exhaust duct or in a transit area between the exhaust duct and the end opening of the valve body or in a transit area between the inlet duct and the exhaust duct, the transversal compartment is delimited locally by an annular support surface for the positioning and radial containment of a respective annular gasket.

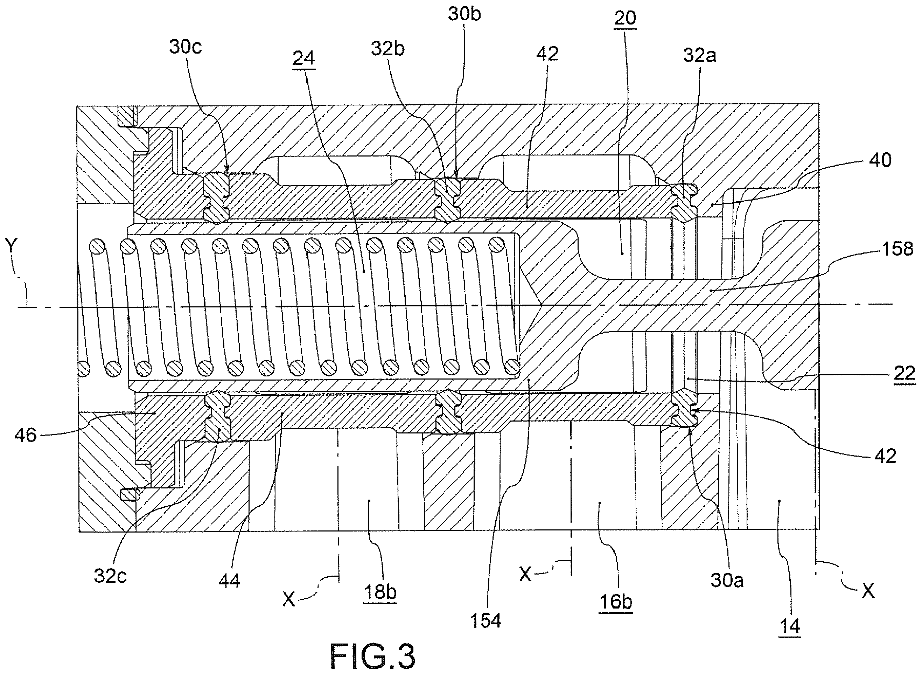

For example, according to the variant shown (figure 3), in a transit area 22 between the inlet duct 14 and the outlet duct 16a, 16b, the transversal compartment 20 is delimited annularly by an inner support surface 30a for the positioning and radial containment of an inner gasket 32a.

According to said example, in a transit area 24 between the outlet duct 16b and the exhaust duct 18a, 18b, the transversal compartment 20 is delimited annularly by an intermediate support surface 30b for the positioning and radial containment of an intermediate gasket 32b.

Lastly, according to such embodiment example, in a transit area 26 between the exhaust duct 18a, 18b and the end aperture 20a, 20b of the compartment 20, the transversal compartment 20 is delimited annularly by an outer support surface 30c for the positioning and radial containment of an outer gasket 32c.

Said support surfaces are cylindrical circular surfaces and have a different diameter from each other, increasing from the inner portion 12c of the valve body 12 towards the end portions 12a, 12b.

In other words, according to the embodiment shown, the inner support surface 30a has a minimum diameter, the intermediate support surface 30b has a diameter greater than the minimum diameter, and the outer support surface 30c has the maximum diameter of the three, greater than the diameter of the intermediate support surface 30b.

Preferably, in addition, in the transit area 22 between the inlet duct 14 and the outlet duct 16a, 16b, an annular shoulder wall 40 is provided, for the realisation of a transversal abutment for positioning the inner gasket 32a.

Said shoulder wall 40 is transversally alongside the inner support surface 30a and has a lateral surface 42, facing the inner support surface 30a, counter-shaped to the lateral surface of the gasket to ensure the correct and stable positioning of said gasket.

According to a preferred embodiment, the valve 10 further comprises at least one spacer placed between one gasket and the next, to keep them firmly in place.

For example, according to the embodiment shown, the valve comprises a inner spacer 42 placed in abutment between the inner gasket 32a and the gasket 32b, and an intermediate spacer 44 placed in abutment between the intermediate gasket 32b and the outer gasket 32c.

Preferably, moreover, the valve 10 comprises a terminal 46, placed in abutment between the outer gasket 32c and the distal head 13a of the valve 10, so that the distal head 13a closes the spacers and gaskets in a pack inside the transversal compartment 20.

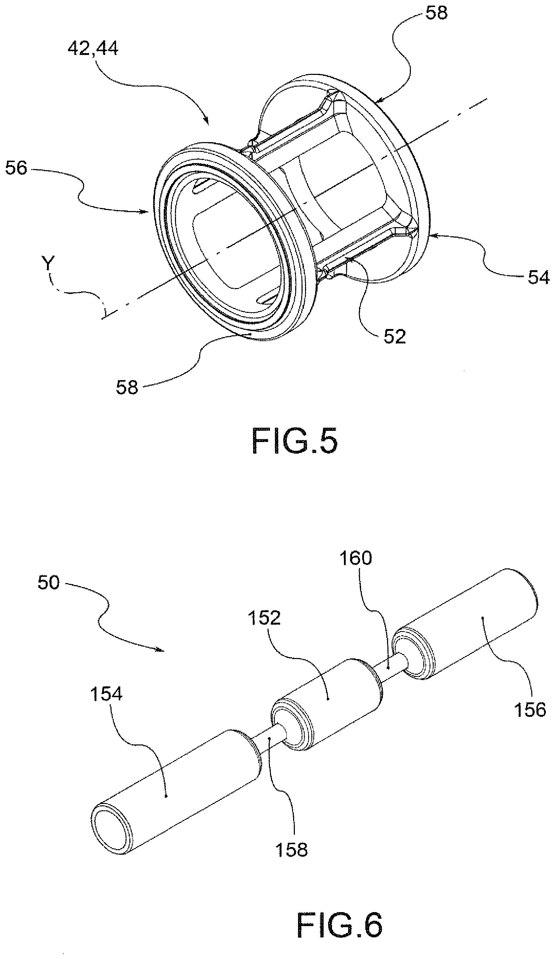

The spacers 42, 44 allow the passage of air through their side walls; for example, said spacers are composed of two ring-shaped bases, joined by a plurality of cross-members placed along the directrices of an imaginary cylinder, spaced at an angle, to allow the passage of air (figure 5).

Each spacer 42, 44 housed in the transversal compartment 20 is positioned between one support surface 30a, 30b and the next adjacent one 30b, 30c.

Preferably, said spacer 42, 44 comprises a central annular portion 52 permeable to the flow of air, and, at the transversal ends thereof, a proximal base 54 and a distal base 56 for the support of the respective support surfaces 30a, 30b, 30c.

The proximal base 54, which when the spacer is assembled correctly in the transversal compartment 20 is facing the inner portion 12c of the valve body 12, thus has an outer diameter greater than the outer diameter of the distal base 56.

Preferably, moreover, the outer diameter of the central annular portion 52 is smaller than the outer diameter of the proximal base 54 (and thus also, even more, than the outer diameter of the distal base 56).

The proximal base 54 and the distal base 56 have two head surfaces 58 perpendicular to the transversal axis Y. Preferably, said head surfaces 58 are counter-shaped to the lateral surface of the gaskets, to ensure the correct and stable positioning thereof in abutment with the gasket.

The shaft 50 comprises at least one connection portion and at least two sealing portions transversely adjacent and connected by the connection portion. The sealing portions have a greater outer diameter greater than the characteristic size of the connection portion and such seals are suitable to create an airtight seal by engaging with the sealing portions of the shaft.

In other words, each annular gasket 32a, 32b, 32c is characterised in terms of dimensions by an inner diameter Di which creates the air tightness by engaging with portions of the shaft 50, and by an outer diameter De for the support of the gasket against the respective support surface 30a, 30b, 30c. Preferably, for the gaskets housed in the transversal compartment, the inner Di is substantially identical, while the outer diameter De is different from one gasket to another, according to the diameter of the respective support surface 30a, 30b, 30c.

In the example shown, the shaft 50 comprises a central sealing portion 152, a distal lateral sealing portion 154, a proximal lateral sealing portion 156, transversally distanced from the central sealing portion 152 and joined thereto by respective connection portions 158, 160 (figure 6).

According to the transversal shaft position 50, the fluidic connection or fluidic separation is performed between the inlet duct 14 and at least one of the outlet ducts 16a, 16b and/or exhaust ducts 18a, 18b.

For the movement of the shaft 50, the valve 10 comprises pneumatic movement means.

According to a preferred embodiment, said pneumatic movement means comprise at least one piston 60, for example housed in a piston chamber 62 made in the proximal head 13b, suitable to push the shaft 50.

Preferably, moreover, the valve 10 comprises return means suitable to move the shaft 50 in opposition to the movement made by the movement means.

For example, said return means comprise a spring 70, for example, a coil spring, engaged with the shaft 50, for example at least partially housed in a spring seat 72 made in the distal head 13a.

The valve 10 further comprises electronically controlled drive means 80 suitable to generate a flow of air for actuating the movement means and/or means of return.

For the manufacturing of the valve 10, the valve body 12 is obtained by casting, if necessary finishing off the casting by machine tooling or directly from a semi-finished bar or by moulding in plastic, such as polyamide (PA).

The ways of the valve are made directly by casting or subsequent machine tooling.

The transversal compartment 20 is obtained directly by casting and then tool-finished, or directly by a machining of the tool.

In particular, to obtain the support surfaces with different diameters, machining is performed for removing metal shavings using a tool provided with a plurality of cutting surfaces, having different cutting diameters corresponding to the diameter of the corresponding support surface.

In the embodiment shown, the cutting tool penetrates transversally into the semi-finished valve body first on one side, for example from the distal portion 12a, and then from the other, such as on the side of the distal portion 12b, to make the support seats provided for on each side.

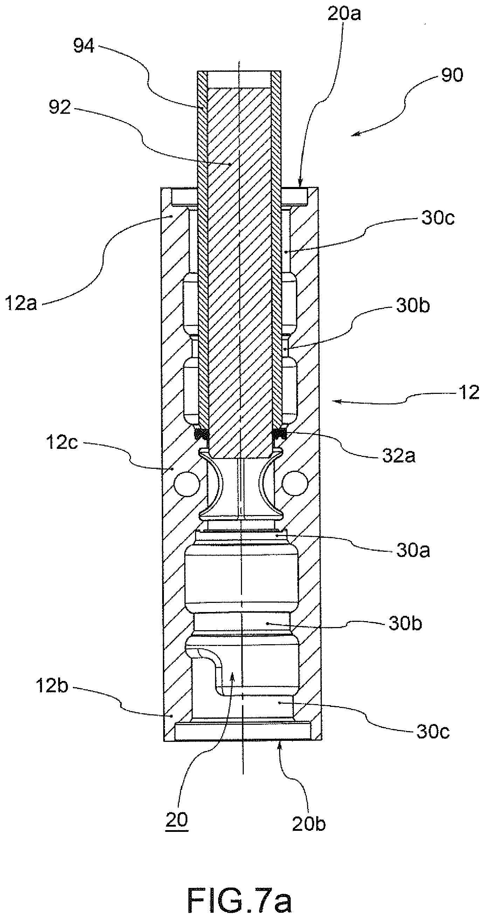

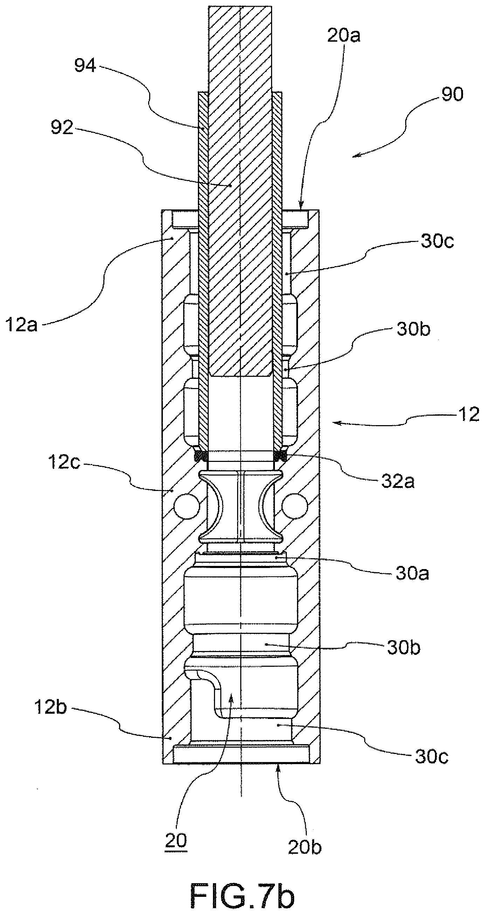

The assembly method further provides for an automated insertion step of the gaskets and spacers inside the transversal compartment 20, for example, by an insertion machine with a telescopic insertion tool 90 (figures 7a and 7b).

The tool 90 comprises an insert 92 and a skirt 94 sliding on command on the insert 92.

The insertion machine picks up from a components magazine a first gasket, fitted on the insert end 92.

The insertion tool enters the transversal compartment 20 according to an insertion direction IN, so as to place the gasket on the respective support surface (figure 7a); the translation of the skirt 94 makes it possible to take the gasket off the insert 94, thus leaving it in position (figure 7b).

The same applies to the spacer and then in succession to the further gaskets and further spacers, taken by the machine from the components magazine depending on the size needed.

In other words, bearing in mind the insertion direction IN along the transversal axis Y, downward of the outlet opening 16a, 16b', the transversal compartment 20 is annularly delimited by the inner support surface 30a, which forms a downward support surface 30a suitable for the radial containment of the inner gasket which forms a downward gasket; upward of the outlet opening 16a, 16b', the transversal compartment 20 is annularly delimited by the intermediate support surface 30a, which forms an upward support surface 30a suitable for the radial containment of the intermediate gasket which forms an upward gasket.

The diameter of the upward support surface is greater than the diameter of the downward support surface for easy insertion of the downward gasket 32a.

For the embodiment example shown, the insertion of the spacers and gaskets takes place first on one side, for example on the side of the distal portion 12a, and then on the other, for example on the side of the proximal portion 12b.

The insertion of the shaft 50, of the spring 70 and the application of the distal head 13a on one side, and the application of the proximal head 13b provided with the piston 60 on the other, complete the assembly of the valve.

Innovatively, the valve according to the present invention makes it possible to overcome the assembly drawbacks spoken of with reference to the prior art.

In fact, the support surfaces of lesser diameter in the gasket insertion direction into the transversal compartment prevents contact between the gaskets and the sharp edges of the wall of the transversal compartment.

Advantageously, moreover, the production of the valve according to the present invention is speeded up.

In fact, according to this advantageous aspect, the insertion of the spacers and gaskets can be performed in an automated manner.

It is clear that a person skilled in the art may make modifications to the valve and method described above.

For example, according to an embodiment variant, the movement means comprise a second piston, placed on the opposite side to the first piston, for example housed in the distal head 13a for the movement commanded by the shaft opposite to that imposed by the first piston.

According to a further embodiment variant, the return means are of the pneumatic type and operationally connected to the drive means, to ensure the return movement of the shaft by means of pressurised air.

The valve described above is of the 5-way /2 position monostable type (i.e.return is through a spring); according to further embodiment variants the valve is of the
-5-way/2 position bistable type (i.e., return is controlled by the piston), or
-5-way/3 position closed centres type (i.e., in the rest configuration of the movement means, the inlet duct is closed), or
-5-way/3 position open centres type (i.e., in the rest configuration of the movement means, the inlet duct is in communication with the two exhaust ducts), or
3-way/2-position "double" type.

Such variants are also contained within the scope of protection defined by the following claims.

## Claims

1. A pneumatic valve (10) comprising:
• a valve body (12) obtained in a single piece by casting or bar processing or by moulding a plastic material;
• a shaft or spool (50);
• at least a downward gasket (32a) and an upward gasket (32b), each gasket consisting of a single piece annular gasket;
• at least one spacer (42,44);
and wherein
- the valve body (12) comprises:
i) a transversal compartment (20) translatably accommodating the a shaft or spool (50) and suitable for the insertion of the annular gaskets (32a,32b) for sealing with the shaft (50) according to an insertion direction (IN) along said transversal axis (Y);
ii) at least one inlet duct (14) leading to the transversal compartment (20) by means of an inlet opening (14') and at least one outlet duct (16a,16b) leading to the transversal compartment (20) by means of an outlet opening (16a',16b'), said inlet duct (14) and outlet duct (16a,16b) being side-by-side and parallel with each other;
iii) wherein, according to said insertion direction (IN), downwardly of the outlet opening (16a',16b'), the transversal compartment (20) is annularly delimited by a downward support surface (30a) suitable for the radial containment of the downward gasket (32a), and upwardly of the outlet opening (16a', 16b'), the transversal compartment (20) is annularly delimited by an upward support surface (30b) suitable for the radial containment of the upward gasket (32b),
iv) and wherein the diameter of the upward support surface (30b) is greater than the diameter of the downward support surface (30a) for a convenient insertion of the downward gasket (32a);
- the downward gasket (32a) is placed on the downward support surface (30a) and the upward gasket (32b) is placed on the upward support surface (30b), and the upward gasket and the downward gasket have the same seal internal diameter and different external diameter, according to the diameter of the corresponding support surface;
- the at' least one spacer (42,44) is placed in abutment with the downward gasket (32a) and the upward gasket (32b), and comprises a centre annular portion (52) permeable to the air flow, and, at the transversal ends thereof, a proximal base (54) and a distal base (56) having a different external diameter for the support to the respective support surfaces.

2. Valve according to claim 1, wherein the valve body further comprises an exhaust duct (18a,18b) leading to the transversal compartment (20) by means of an exhaust opening (18a',18b'),
wherein, according to said insertion direction (IN), upwardly of the exhaust opening (18a',18b'), the transversal compartment (20) is delimited annularly by a further support surface (30c) suitable for the radial containment of a further gasket (32c),
and wherein the diameter of said further support surface (30c) is greater than the diameter of the upward support surface (30b).

3. Valve according to claim 2, wherein the exhaust duct (18a,18b) and the outlet duct (16a,16b) are side-by-side and parallel with each other.

4. Valve according to any of the preceding claims, comprising a further gasket (32c) placed on the further support surface (30c), and wherein
the further gasket and the downward gasket have the same seal internal diameter and different external diameter, according to the diameter of the corresponding support surface.

5. Valve according to any of claims 1 to 4, wherein the spacer (42, 44) is composed of two ring-shaped bases (54,56) joined by a plurality of cross-members placed along the directrices of an imaginary cylinder, spaced at an angle, to allow the passage of air.

6. Valve according to any of claims 1 to 5, wherein the proximal base (54) and the distal base (56) have two head surfaces (58), perpendicular to the transversal axis (Y), counter-shaped to the lateral surface of the gaskets.

7. Valve according to any of claims 1 to 6, wherein the proximal base (54) has an outer diameter greater than the outer diameter of the distal base (56).

8. A method of manufacture of a pneumatic valve (10) according to any of claims 1 to 7, comprising the following steps:
- manufacturing a valve body (12) having a transversal compartment (20) provided with support surfaces for gaskets;
- inserting in the transversal compartment a first gasket having a first external diameter, said gasket consisting of a single piece annular gasket;
- inserting a first spacer in abutment to a first gasket, said first spacer having a proximal base and a distal base having a different external diameter;
- inserting in the transversal compartment a second gasket having a second external diameter, greater than the diameter of the first gasket, said gasket consisting of a single piece annular gaskets;
- inserting a second spacer in abutment to the second gasket, said second spacer having a proximal base and a distal base having a different external diameter.

9. Method according to claim 8, wherein the steps of gasket insertion take place in an automated or semi-automated way.

## Patentansprüche

1. Pneumatikventil (10), das Folgendes umfasst:
• einen Ventilkörper (12), der einteilig durch Gießen oder Stabbearbeitung oder durch Formen eines Kunststoffmaterials erhalten wird;
• einen Schaft oder Schieber (50);
• mindestens eine abwärts gerichtete Dichtung (32a) und eine aufwärts gerichtete Dichtung (32b), wobei jede Dichtung aus einer einteiligen ringförmigen Dichtung besteht;
• mindestens einen Abstandshalter (42, 44);
und wobei
- der Ventilkörper (12) Folgendes umfasst:
(i) einen Querraum (20), der translatorisch den einen Schaft oder Schieber (50) aufnimmt und sich zum Einsetzen der ringförmigen Dichtungen (32a, 32b) zum Dichten mit dem Schaft (50) gemäß einer Einsetzungsrichtung (IN) entlang der Querachse (Y) eignet;
(ii) mindestens einen Einlasskanal (14), der mittels einer Einlassöffnung (14') zu dem Querraum (20) führt, und mindestens einen Auslasskanal (16a, 16b), der mittels einer Auslassöffnung (16a', 16b') zu dem Querraum (20) führt, wobei der Einlasskanal (14) und der Auslasskanal (16a, 16b) nebeneinander liegen und parallel zu einander sind;
(iii) wobei gemäß der Einsetzungsrichtung (IN) in Abwärtsrichtung der Auslassöffnung (16a', 16b') die Querkammer (20) ringförmig durch eine abwärts gerichtete Unterstützungsfläche (30a) abgegrenzt ist, die sich zum radialen Einschluss der abwärts gerichteten Dichtung (32a) eignet, und in Aufwärtsrichtung der Auslassöffnung (16a', 16b') der Querraum (20) ringförmig durch eine aufwärts gerichtete Unterstützungsfläche (30b) abgegrenzt ist, die sich zum radialen Einschluss der aufwärts gerichteten Dichtung (32b) eignet,
(iv) und wobei der Durchmesser der aufwärts gerichteten Unterstützungsfläche (30b) für eine praktische Einsetzung der abwärts gerichteten Dichtung (32a) größer ist als der Durchmesser der abwärts gerichteten Unterstützungsfläche (30a),
- die abwärts gerichtete Dichtung (32a) auf der abwärts gerichteten Unterstützungsfläche (30a) platziert ist und die aufwärts gerichtete Dichtung (32b) auf der aufwärts gerichteten Unterstützungsfläche (30b) platziert ist und die aufwärts gerichtete Dichtung und die abwärts gerichtete Dichtung den gleichen Dichtungsinnendurchmesser und gemäß dem Durchmesser der entsprechenden Unterstützungsfläche unterschiedliche Außendurchmesser aufweisen;
- der mindestens eine Abstandshalter (42, 44) im Anschlag mit der abwärts gerichteten Dichtung (32a) und der aufwärts gerichteten Dichtung (32b) platziert ist und einen ringförmigen mittleren Abschnitt (52), der gegenüber der Luftströmung durchlässig ist, und an den Querenden davon eine proximale Basis (54) und eine distale Basis (56) umfasst, die einen unterschiedlichen Außendurchmesser für die Unterstützung der entsprechenden Unterstützungsflächen aufweisen.

2. Ventil nach Anspruch 1, wobei der Ventilkörper überdies einen Abgaskanal (18a, 18b) umfasst, der mittels einer Abgasöffnung (18a', 18b') zum Querraum (20) führt,
wobei gemäß der Einsetzungsrichtung (IN) in Aufwärtsrichtung der Abgasöffnung (18a', 18b') der Querraum (20) ringförmig durch eine weitere Unterstützungsfläche (30c) abgegrenzt ist, die sich für den radialen Einschluss einer weiteren Dichtung (32c) eignet,
und wobei der Durchmesser der weiteren Unterstützungsfläche (30c) größer als der Durchmesser der aufwärts gerichteten Unterstützungsfläche (30b) ist.

3. Ventil nach Anspruch 2, wobei der Abgaskanal (18a, 18b) und der Auslasskanal (16a, 16b) nebeneinander liegen und parallel zueinander sind.

4. Ventil nach einem der vorhergehenden Ansprüche, das eine weitere Dichtung (32c) umfasst, die auf der weiteren Unterstützungsfläche (30c) platziert ist, und wobei
die weitere Dichtung und die abwärts gerichtete Dichtung den gleichen Dichtungsinnendurchmesser und einen unterschiedlichen Außendurchmesser gemäß dem Durchmesser der entsprechenden Unterstützungsfläche aufweisen.

5. Ventil nach einem der Ansprüche 1 bis 4, wobei der Abstandshalter (42, 44) aus zwei ringförmigen Basen (54, 56) besteht, die durch eine Vielzahl Querelemente verbunden sind, die entlang der Leitkurven eines gedachten Zylinders platziert sind, in einem Winkel beabstandet sind, um den Durchgang von Luft zu erlauben.

6. Ventil nach einem der Ansprüche 1 bis 5, wobei die proximale Basis (54) und die distale Basis (56) zwei Kopfflächen (58) aufweisen, die senkrecht zur Querachse (Y) sind und gegenförmig zur seitlichen Fläche der Dichtungen sind.

7. Ventil nach einem der Ansprüche 1 bis 6, wobei die proximale Basis (54) einen Außendurchmesser aufweist, der größer als der Außendurchmesser der distalen Basis (56) ist.

8. Verfahren zur Herstellung eines Pneumatikventils (10) nach einem der Ansprüche 1 bis 7, das die folgenden Schritte umfasst:
- Herstellen eines Ventilkörpers (12), der einen Querraum (20) aufweist, der mit Unterstützungsflächen für Dichtungen versehen ist;
- Einsetzen einer ersten Dichtung, die einen ersten Außendurchmesser aufweist, in den Querraum, wobei die Dichtung aus einer einteiligen ringförmigen Dichtung besteht;
- Einsetzen eines ersten Abstandshalters im Anschlag mit einer ersten Dichtung, wobei der erste Abstandshalter eine proximale Basis und eine distale Basis aufweist, die einen unterschiedlichen Außendurchmesser aufweisen;
- Einsetzen einer zweiten Dichtung, die einen zweiten Außendurchmesser aufweist, der größer als der Durchmesser der ersten Dichtung ist, in den Querraum, wobei die Dichtung aus einer einteiligen ringförmigen Dichtung besteht;
- Einsetzen eines zweiten Abstandshalters im Anschlag mit der zweiten Dichtung, wobei der zweite Abstandshalter eine proximale Basis und eine distale Basis aufweist, die einen unterschiedlichen Außendurchmesser aufweisen.

9. Verfahren nach Anspruch 8, wobei die Schritte des Einsetzens der Dichtung auf eine automatisierte oder halbautomatisierte Art und Weise erfolgen.

## Revendications

1. Soupape pneumatique (10) comprenant :
• un corps de soupape (12) obtenu en une seule pièce par coulage ou traitement d'une barre ou par moulage d'une matière plastique ;
• un arbre ou tiroir (50) ;
• au moins un joint d'étanchéité vers le bas (32a) et un joint d'étanchéité vers le haut (32b), chaque joint d'étanchéité étant constitué d'un joint d'étanchéité annulaire en une seule pièce ;
• au moins un espaceur (42, 44) ;
et dans laquelle
- le corps de soupape (12) comprend :
i) un compartiment transversal (20) accueillant de manière déplaçable l'arbre ou tiroir (50) et approprié pour l'insertion des joints d'étanchéité annulaires (32a, 32b) en vue d'une étanchéité avec l'arbre (50) selon une direction d'insertion (IN) le long dudit axe transversal (Y) ;
ii) au moins un conduit d'entrée (14) menant au compartiment transversal (20) au moyen d'une ouverture d'entrée (14') et au moins un conduit de sortie (16a, 16b) menant au compartiment transversal (20) au moyen d'une ouverture de sortie (16a', 16b'), ledit conduit d'entrée (14) et ledit conduit de sortie (16a, 16b) étant côte à côte et parallèles l'un à l'autre ;
iii) dans lequel, selon ladite direction d'insertion (IN), vers le bas de l'ouverture de sortie (16a', 16b'), le compartiment transversal (20) est annulairement délimité par une surface de support vers le bas (30a) appropriée pour le confinement radial du joint d'étanchéité vers le bas (32a), et vers le haut de l'ouverture de sortie (16a', 16b'), le compartiment transversal (20) est annulairement délimité par une surface de support vers le haut (30b) appropriée par le confinement radial du joint d'étanchéité vers le haut (32b),
iv) et dans lequel le diamètre de la surface de support vers le haut (30b) est supérieur au diamètre de la surface de support vers le bas (30a) pour une insertion pratique du joint d'étanchéité vers le bas (32a) ;
- le joint d'étanchéité vers le bas (32a) est placé sur la surface de support vers le bas (30a) et le joint d'étanchéité vers le haut (32b) est placé sur la surface de support vers le haut (30b), et le joint d'étanchéité vers le haut et le joint d'étanchéité vers le bas ont le même diamètre interne d'étanchéité et un diamètre externe différent, selon le diamètre de la surface de support correspondante ;
- le au moins un espaceur (42, 44) est placé en butée avec le joint d'étanchéité vers le bas (32a) et le joint d'étanchéité vers le haut (32b), et comprend une partie centrale annulaire (52) perméable à l'écoulement d'air, et, à ses extrémités transversales, une base proximale (54) et une base distale (56) ayant un diamètre externe différent pour le support sur les surfaces de support respectives.

2. Soupape selon la revendication 1, dans laquelle le corps de soupape comprend en outre un conduit d'échappement (18a, 18b) menant au compartiment transversal (20) au moyen d'une ouverture d'échappement (18a', 18b'),
dans laquelle, selon ladite direction d'insertion (IN), vers le haut de l'ouverture d'échappement (18a', 18b'), le compartiment transversal (20) est délimité annulairement par une autre surface de support (30c) appropriée pour le confinement radial d'un autre joint d'étanchéité (32c),
et dans laquelle le diamètre de ladite autre surface de support (30c) est supérieur au diamètre de la surface de support vers le haut (30b).

3. Soupape selon la revendication 2, dans laquelle le conduit d'échappement (18a, 18b) et le conduit de sortie (16a, 16b) sont côte à côte et parallèles l'un à l'autre.

4. Soupape selon l'une quelconque des revendications précédentes, comprenant un autre joint d'étanchéité (32c) placé sur l'autre surface de support (30c), et dans laquelle
l'autre joint d'étanchéité et le joint d'étanchéité vers le bas ont le même diamètre interne d'étanchéité et un diamètre externe différent, selon le diamètre de la surface de support correspondante.

5. Soupape selon l'une quelconque des revendications 1 à 4, dans laquelle l'espaceur (42, 44) est composé de deux bases en forme de bague (54, 56) jointes par une pluralité de traverses placées le long des directions d'un cylindre imaginaire, espacées d'un angle, pour permettre le passage d'air.

6. Soupape selon l'une quelconque des revendications 1 à 5, dans laquelle la base proximale (54) et la base distale (56) ont deux surfaces de tête (58), perpendiculaire à l'axe transversal (Y), de forme opposée à celle de la surface latérale des joints d'étanchéité.

7. Soupape selon l'une quelconque des revendications 1 à 6, dans laquelle la base proximale (54) a un diamètre extérieur supérieur au diamètre extérieur de la base distale (56).

8. Procédé de fabrication d'une soupape pneumatique (10) selon l'une quelconque des revendications 1 à 7, comprenant les étapes suivantes :
- fabrication d'un corps de soupape (12) ayant un compartiment transversal (20) pourvu de surfaces de support pour joints d'étanchéité ;
- insertion dans le compartiment transversal d'un premier joint d'étanchéité ayant un premier diamètre externe, ledit joint d'étanchéité étant constitué d'un joint d'étanchéité annulaire en une seule pièce ;
- insertion d'un premier espaceur en butée avec un premier joint d'étanchéité, ledit premier espaceur ayant une base proximale et une base distale ayant un diamètre externe différent ;
- insertion dans le compartiment transversal d'un deuxième joint d'étanchéité ayant un deuxième diamètre externe, supérieur au diamètre du premier joint d'étanchéité, ledit joint d'étanchéité étant constitué d'un joint d'étanchéité annulaire en seule pièce ;
- insertion d'un deuxième espaceur en butée avec le deuxième joint d'étanchéité, ledit deuxième espaceur ayant une base proximale et une base distale ayant un diamètre externe différent.

9. Procédé selon la revendication 8, dans lequel les étapes d'insertion de joint d'étanchéité a lieu d'une manière automatisée ou semi-automatisée.
